**Europäisches Patentamt**

**European Patent Office**

**Office européen des brevets**

(19)

(11) Veröffentlichungsnummer : **0 380 005 B1**

(12) **EUROPÄISCHE PATENTSCHRIFT**

(45) Veröffentlichungstag der Patentschrift :
**22.07.92 Patentblatt 92/30**

(51) Int. Cl.⁵ : **F16B 19/10, F16B 19/04**

(21) Anmeldenummer : **90101147.8**

(22) Anmeldetag : **20.01.90**

(54) **Selbstbohrender Blindniet und Verfahren zu seiner Herstellung.**

(30) Priorität : **25.01.89 JP 15544/89**

(43) Veröffentlichungstag der Anmeldung :
**01.08.90 Patentblatt 90/31**

(45) Bekanntmachung des Hinweises auf die
Patenterteilung :
**22.07.92 Patentblatt 92/30**

(84) Benannte Vertragsstaaten :
**AT BE CH DK ES FR GB GR IT LI LU NL SE**

(56) Entgegenhaltungen :
**DE-A- 2 106 107**
**DE-A- 2 457 136**
**DE-A- 2 542 825**

(73) Patentinhaber : **Adolf Würth GmbH & Co. KG**
**Maienweg 10**
**W-7118 Künzelsau (DE)**

(72) Erfinder : **Weidner, Karl**
**Worgberg 14**
**W-7118 Ingelfingen (DE)**
Erfinder : **Shinjou, Katsumi**
**1-22, Matsu 3-chome, Nishinariku**
**Osakashi, Osakafu (JP)**

(74) Vertreter : **Patentanwälte RUFF, BEIER und**
**SCHÖNDORF**
**Neckarstrasse 50**
**W-7000 Stuttgart 1 (DE)**

## Beschreibung

Die Erfindung betrifft einen selbstbohrenden Blindniet und ein Verfahren zu seiner Herstellung.

Ein bekannter selbstbohrender Blindniet weist eine Bohrspitze an dem vorderen Ende eines Dorns auf, der in einem Hohlkörper eingesetzt ist. Beispielsweise zeigen die japanischen Patentveröffentlichungen 41-16724, 49-22967 und US-PS 4 293 258 typische Selbstbohrblindniete dieser Art.

Bei einem weiteren selbstbohrenden Blindniet (DE-A-2 457 136) ist die kaltgeschmiedete Bohrspitze einstückig am Schraft angeformt. Die bohrspitze weist einen größeren Durchmesser als der übrige Schaft auf, so daß eine Art Anschlag gebildet ist.

Ebenfalls bekannt ist ein selbstbohrender Zugniet (DE-A-2 106 107), bei dem der verbreiterte Kopf einstückig an dem Schaft angeformt ist. Zwischen dem Schaft und der Bohrspitze sind in spezieller Weise abgerundete Übergangsflächen angeordnet, die mit einem Hochdruckschmiermittel versehen werden. Dadurch soll ein Aufgleiten des Hohlkörpers und dadurch seine Aufweitung erreicht werden.

Ein Nachteil der bekannten Niete ist die Schwierigkeit der Massenherstellung und die erhöhten Herstellungskosten. Insbesondere ist es kostenaufwendig, einen einstückigen Niet herzustellen, bei dem ein Dorn innerhalb des Hohlkörpers eingesetzt und mit einem Bohrer versehen ist, der einen größeren Durchmesser als der Körper aufweist. Es gibt ein anderes Verfahren, das kurze Bohrspitzen getrennt von den Körpern herstellt und sie verbindet. Es ist jedoch schwierig, kurze Bohrspitzen mit exakten Dimensionen herzustellen. Obwohl es einen großen Bedarf für Blindniete in der Industrie gibt, ist die Schwierigkeit der Massenproduktion ein Engpaß bei der Bereitstellung.

Der Erfindung liegt die Aufgabe zugrunde, einen selbstbohrenden Blindniet zu schaffen, der zur Massenproduktion geeignet ist.

Der Erfindung liegt ebenfalls die Aufgabe zugrunde, ein Verfahren zur Massenproduktion von in einem selbstbohrenden Blindniet enthaltenen Bohrspitzen zu schaffen.

Zur Lösung dieser Aufgabe schlägt die Erfindung einen selbstbohrenden Blindniet mit den Merkmalen des Anspruchs 1 vor.

Die Bohrspitze wird in Weiterbildung aus einem Rohling mit einem pfostenännlichen Körper mit einem Durchmesser hergestellt, der dem des hohlen Hauptkörpers etwa gleich ist, wobei der pfostenähnliche Körper einen gerändelten Schaftabschnitt benachbart zu dem Bohrabschnitt aufweist und die Endfläche des gerändelten Schaftabschnittes senkrecht zu der Achse des Niets verläuft.

Die Erfindung schlägt ebenfalls ein Verfahren zum Herstellen eines selbstbohrenden Blindniets mit den Merkmalen des Anspruchs 3 vor. Weiterbildungen sind Gegenstand der Unteransprüche.

Weitere Merkmale, Einzelheiten und Vorzüge der Erfindung ergeben sich aus den Ansprüche, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:

Fig. 1 eine Seitenansicht eines zu einem selbstbohrenden Blindniet nach der Erfindung gehörenden Dorns;

Fig. 2 eine Aufsicht auf den Dorn der Fig. 1;

Fig. 3 (a), 3 (b) und 3 (c) Seitenansichten der Bohrspitze in verschiedenen Herstellungsstadien;

Fig. 4 eine Vorderansicht einer Form, in der der Bohrabschnitt durch Kaltschmieden geformt wird;

Fig. 5 eine Aufsicht auf ein Paar von Gesenkformen;

Fig. 6 eine perspektivische Ansicht einer Walz-Form;

Fig. 7 eine Seitenansicht eines Dorns und einer mit diesem verbundenen Bohrspitze; und

Fig. 8 eine der Fig. 7 entsprechende Seitenansicht eines fertiggestellten Blindniets.

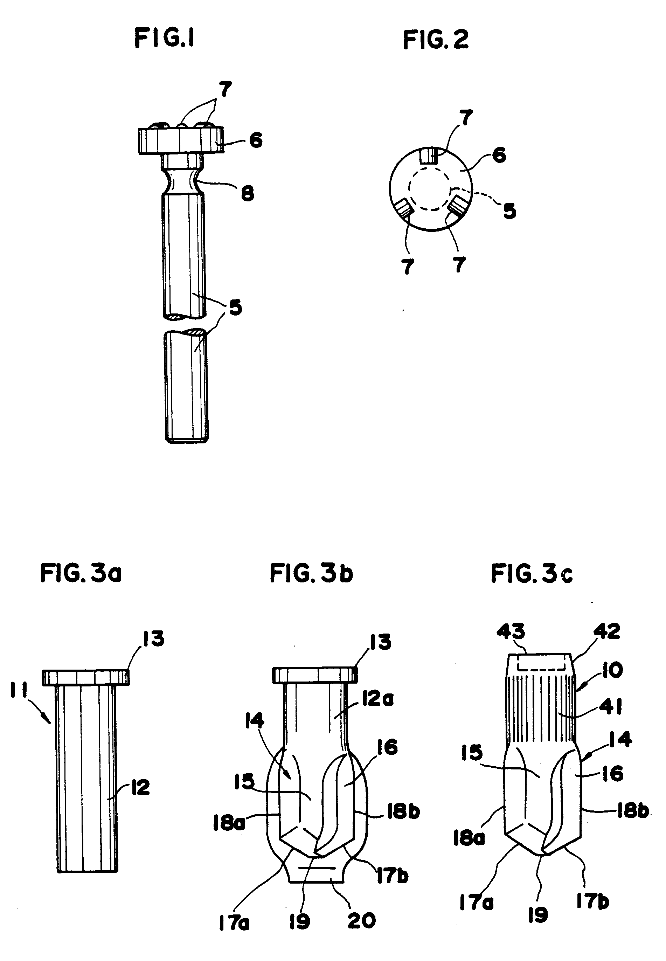

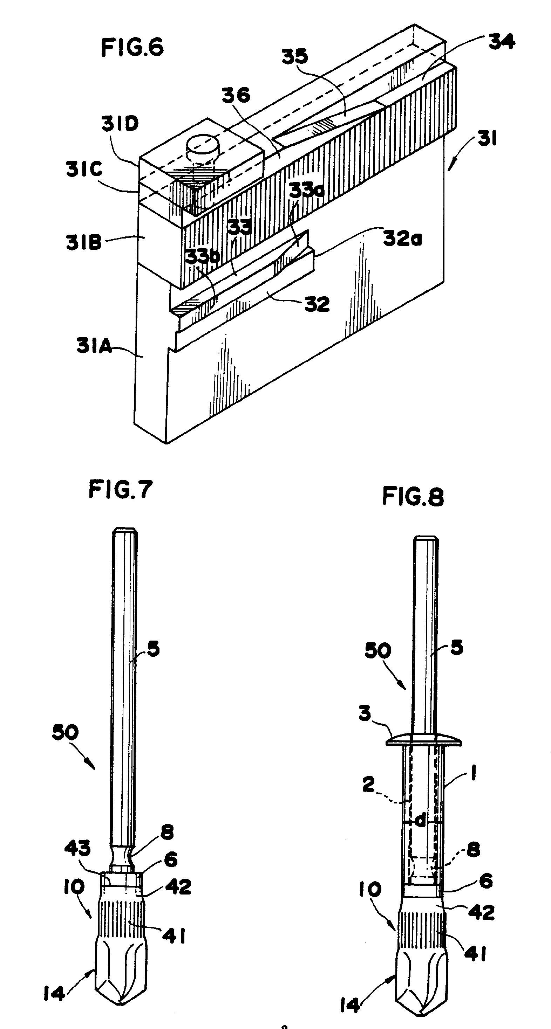

In Fig. 1 und 2 ist ein Dorn 5 zu sehen, der zu dem Blindniet der vorliegenden Erfindung gehört. Der Dorn 5 enthält einen Flansch 6, der einen dem Durchmesser des Nietkörpers 1 (Fig. 8) im wesentlichen gleichen Durchmesser aufweist. Der Dorn 5 weist Buckelschweißungen 7 auf, die auf seiner in Fig. 1 oberen Endfläche radial abgelagert sind, wie dies am besten aus Fig. 2 hervorgeht. Der Dorn 5 weist einen Halsabschnitt 8 mit einem verringerten Durchmesser benachbart zum Flansch 6 auf. Der Halsabschnitt 8 ist dazu da, das Abreißen dieses Teils zu erleichtern. Der Flansch 6 und die Buckelschweißungen 7 werden durch ein bekanntes Stauchverfahren hergestellt.

In den Fig. 3(a) bis 3(c) ist das Verfahren der Formung der Bohrspitze 10 dargestellt. Fig. 3(a) zeigt einen Rohling 11, der einen pfostenähnlichen bzw. zapfenartigen Körper 12 mit einem Durchmesser aufweist, der dem Außendurchmesser (d) des Nietkörpers (1) gleich ist, sowie einen Flansch 13, der einstückig mit dem zapfenartigen Körper 12 hergestellt ist. Die Flansche 13 werden beim Transportieren und Positionieren der Rohlinge 11 verwendet, wenn die Bohrabschnitte 14 der Blindniete 1 automatisch kaltgeschmiedet und gewalzt werden. Im letzten Verfahrensstadium werden die Flansche 13 beseitigt. Die Rohlinge 11 bestehen aus Stahl mit niedrigem Kohlenstoffanteil. Fig. 3(b) zeigt den Verfahrensschritt, bei dem der Bohrabschnitt 14 geformt wird. Ein unterer Teil des zapfenartigen Körpers 12 wird zwischen einem Paar von Formen 21A und 21B kaltgeschmiedet. Die Formen 21A und 21B werden mit einer unebenen Oberfläche versehen, die zur Formung des Bohrabschnittes 14 ausgebildet sind. Während der Rohling 11 zwischen den Gesenkformen 21A und 21B gepreßt wird, wird das Metall eingeschnürt und beult sich in einem überstehenden Rest 20 längs des Umfangs des Bohrabschnittes 14 aus.

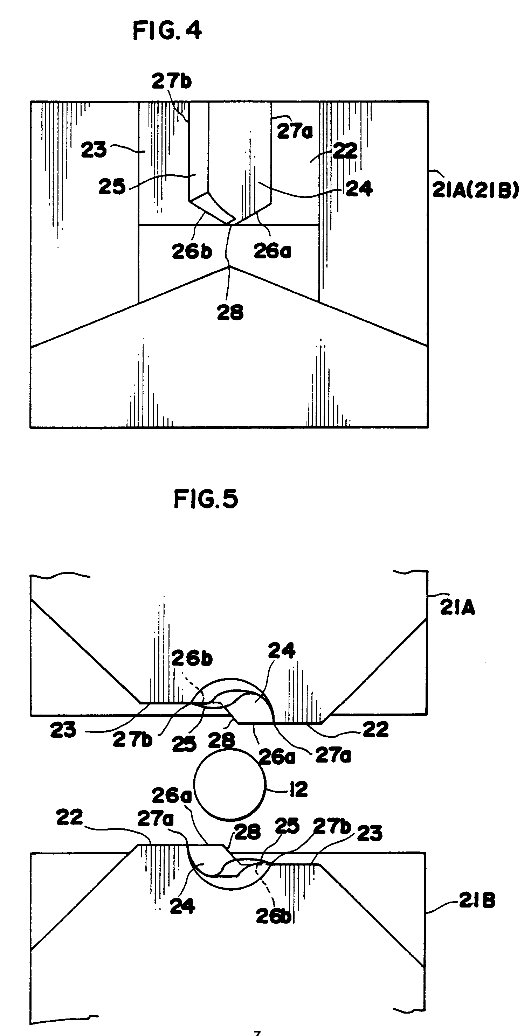

In Fig. 4 und 5 sind die Gesenke 21A und 21B symmetrisch geformt dargestellt. Jede Form 2IA, 21B weist eine erste Bezugsfläche 22 und eine zweite Bezugsfläche 23 unter Zwischenschaltung einer Stufe auf. Eine Ausnehmung 24, die zur Formung eines Schneidkantenrückens 15 des Bohrabschnittes 14 entworfen ist, ist in Bezug zu der Fläche 22 gebildet. Ein konvexer Abschnitt 25, der zur Formung einer langgestreckten Nut entworfen ist, mit deren Hilfe Schneidspäne abgeführt werden können, ist in Bezug zu der Fläche 23 gebildet. Wie sich aus Fig. 3(b) ergibt, weist der Bohrabschnitt 14 zwei Schneidkanten 17a und 18a an einer Seite und zwei Schneidkanten 17b und 18b an der anderen Seite auf. Die Schneidkanten 17a und 18a werden durch eine erste Kante 26a bzw. eine zweite Kante 27a der Form gebildet. Beide Formkanten 26a und 27a sind in der Fläche 22 ausgebildet. Die anderen Schneidkanten 17b und 18b werden durch die Formkanten 26b bzw. 27b geformt. Beide Formkanten 26b und 27b sind in der Fläche 23 gebildet. Die Formkanten 26a und 26b werden durch einen Grat 28 verbunden, der eine Meißelkante 19 formt.

Fig. 3(c) zeigt eine endgültige Bohrspitze 10, die den Formungsund Walzungsprozeß beendet hat.

Unter Bezugnahme auf Fig. 6 wird nun die Walzform 31 beschrieben:

Die Walzform 31 ist mit einem Formkörper 31A versehen, der eine erste Rippe 32 zum Entfernen des überstehenden Grates 20 in dem Bohrabschnitt 14 und eine zweite Rippe 33 zum Abbrechen von Überständen aufweist. Des weiteren enthält die Walzform eine senkrecht gezahnte Rändelungsform 31B, eine Form 31C zum Abbrechen des Flansches 13 und eine Form 31D zum Glätten. Die erste Rippe 32 weist eine Stufe 32a an ihrem Ende auf, während die zweite Rippe 33 einen schräg verlaufenden Abschnitt 33a und einen ebenen Abschnitt 33b aufweist. Die Wickelform 31C weist einen horizontalen Abschnitt 34 zum Anliegen an dem Flansch 13, einen schräg verlaufenden Abschnitt 35, um den Flansch 13 von unten zu drücken, und eine steile Seite 36 zum Zerbrechen des Flansches 13 auf.

Ein Paar von Walzformen 31 sind einander gegenüberliegend angeordnet, wobei der Rohling 11 mit einem fertiggestellten Bohrabschnitt 14 zwischen ihnen eingesetzt ist. Dabei wird der Flansch 13 des Rohlings 11 von dem horizontalen Abschnitt 34 der Form gehaltert. In diesem Zustand werden die Walzformen 31 gegeneinander bewegt. Der überstehende Rest 20 des Rohlings 11 kommt zur Anlage an der Stufe 32a und wird entfernt. Nach dem Entfernen des überstehenden Restes 20 bleibende, nicht dargestellte Splitter werden von dem schräg verlaufenden Abschnitt 33a und dem flachen Abschnitt 33b der Rippe 33 zerstört.

Ein Schaft 12a des Rohlings 11 wird mit Hilfe der Rändelungsform 31B so gerändelt, daß er senkrechte Kerben 41 aufweist. Der Flansch 13 des Rohlings wird von dem schräg verlaufenden Abschnitt 35B der Wickelform 31C angehoben und von der steilen Seite 36 zerbrochen, bis er in ein konisch zulaufendes Ende 42 geformt ist, das einen Durchmesser aufweist, der dem Außendurchmesser des Kopfes 6 des Dornes 5 im wesentlichen oder sogar vollständig gleich ist. Das zulaufende Ende 42 wird von der Abflachungsplatte 31D endbearbeitet. Auf diese Weise wird ein flaches, ringförmiges Anschlagsende 43 geformt, das rechtwinklig gegenüber der Achse des Bohrabschnittes 14 verläuft, und dementsprechend auch rechtwinklig gegenüber der Achse des Niets. Anschließend wird die Bohrspitze 10 zur Erreichung ausreichender Festigkeit karboriert bzw. kohlenstoffeinsatzgehärtet.

Nun kann die Endfläche 43 bzw. die Anschlagsfläche 43 der auf diese Weise hergestellten Bohrspitze 10 den Flanschkopf 6 in Fig. 1 und 2 berühren. Anschließend wird die Bohrspitze 10 mit dem Schaft 5 durch eine Schweißung mit Hilfe der Schweißvorsprünge 7 bzw. Schweißbuckel verbunden. Auf diese Weise erhält man den in Fig. 7 dargestellten Schaft 50 mit Bohrer.

Fig. 8 zeigt einen selbstbohrenden Blindniet, der derart hergestellt ist, daß der erwähnte Schaft 50 mit einem Bohrer mit dem Nietkörper 1 kombiniert wird. Der rohrförmige Nietkörper 1 weist ein zentrales Loch 2 und einen herkömmlichen Nietkörper auf. Der Schaft 5 wird in das zentrale Loch 2 eingesetzt. Der Flanschabschnitt 3 wird an einem Ende des Nietkörpers 1 gebildet. Der Nietkörper kann aus Metall bestehen, beispielsweise einer Aluminiumlegierung. Das Metall, beispielsweise die Aluminiumlegierung, ist weich im Vergleich mit dem Schaft 5.

**Patentansprüche**

1. Selbstbohrender Blindniet, mit einem Hauptkörper (1) mit einer Bohrung, einem in der Bohrung des Hauptkörpers eingesetzten Dorn (5), der einen Anschlag für den Hauptkörper (1) enthält, sowie mit einer Bohrspitze (10), die einen kaltgeschmiedeten Bohrabschnitt (14) aufweist, dadurch gekennzeichnet, daß die Bohrspitze (10) an ein Anschlagsende des Dorns (5) angeschweißt ist.

2. Blindniet nach Anspruch 1, dadurch gekennzeichnet, daß die Bohrspitze (10) aus einem Rohling (11) mit einem zapfenartigen Körper (12) hergestellt ist, der einen dem Hauptkörper (1) etwa gleichen Durchmesser aufweist, wobei der zapfenartige Körper (12) einen gerändelten Schaftabschnitt (12a) benachbart zu dem Bohrabschnitt (14) aufweist und die Stirnfläche des gerändelten Schaftabschnittes (12a) senkrecht zu der Achse des Niets verläuft.

3. Verfahren zum Herstellen eines selbstbohrenden Blindniets, bei dem ein mit einer Bohrspitze (10) versehener Schaft (5) in eine Zentralbohrung (2) eines Nietkörpers (1) eingesetzt wird, dadurch gekennzeichnet, daß zur Herstellung der Bohrspitze (10) ein zapfenartiger Rohling aus Stahl mit niedrigem Kohlenstoffanteil mit einem Flansch (13) vorbereitet wird, daß ein Bohrabschnitt (14) in einem unteren Abschnitt des Rohlings (11) durch Kaltschmieden geformt wird, ein Abschnitt (12a) des Rohlings benachbart zu dem Bohrabschnitt (14) gerändelt wird und der Flansch (13) des Rohlings (11) beseitigt und abgeflacht wird, so daß die Stirnfläche (43) des Schafts (12) senkrecht zu der Achse des Niets verläuft, und die Bohrspitze (10) mit dem Schaft (5) verschweißt wird.

4. Verfahren nach Anspruch 3, dadurch gekennzeichnet, daß der Flansch (13) zur Bildung eines zulaufenden Abschnitts (42) durch Walzen gleichzeitig gepreßt und angehoben wird.

5. Verfahren nach Anspruch 3 oder 4, dadurch gekennzeichnet, daß die Bohrspitze (10) insbesondere durch Buckelschweißen mit einem verbreiterten Kopf (6) des Schaftes (5) verschweißt wird.

## Claims

1. Self-drilling blind rivet, with a main body (1) having a bore, a mandrel (5) inserted in the main body bore and which contains a stop for said main body (1), as well as with a drilling bit (10), which has a cold-forged drilling portion (14), characterized in that the drilling bit (10) is welded to a stop end of the mandrel (5).

2. Blind rivet according to claim 1, characterized in that the drilling bit (10) is produced from a blank (11) with a pin-like body (12), which has roughly the same diameter as the main body (1), the pin-like body (12) having a milled shank portion (12a) adjacent to the drilling portion (14) and the end face of the milled shank portion (12a) is at right angles to the rivet axis.

3. Method for the manufacture of a self-drilling blind rivet, in which a shank (5) provided with a drilling bit (10) is inserted in a central bore (2) of a rivet body (1), characterized in that for the manufacture of the drilling bit (10) a pin-like blank made from steel having a low carbon content and having a flange (13) is prepared, that a drilling portion (14) is shaped by cold-forging in a lower portion of the blank (11), a portion (12a) of the blank is milled adjacent to the drilling portion (14) and the flange (13) of the blank (11) is eliminated and flattened, so that the end face (43) of the shank (12) is at right angles to the rivet axis and the drilling bit (10) is welded to the shank (5).

4. Method according to claim 3, characterized in that, for forming a tapering portion (42), the flange (13) is simultaneously pressed and raised by rolling.

5. Method according to claims 3 or 4, characterized in that the drilling bit (10) is in particular welded by projection welding to a widened head (6) of the shank (5).

## Revendications

1. Rivet aveugle autotaraudeur, avec un corps principal (1) présentant un alésage, une douille (5) insérée dans l'alésage du corps principal, cette douille contenant une butée pour le corps principal (1), ainsi qu'avec une tête de forage (10) qui présente une section de forage (14) forgée à froid, caractérisé en ce que la pointe de forage (10) est soudée à une extrémité de butée de la douille (5).

2. Rivet aveugle selon la revendication 1, caractérisé en ce que la pointe de forage (10) est fabriquée à partir d'une ébauche (11) à corps (12) en forme de tourillon, qui présente un diamètre sensiblement identique au corps principal (1), le corps (12) en forme de tourillon présentant une section de tige (12a) moletée au voisinage de la section de forage (14), la surface frontale de la section de tige (12a) moletée s'étendant perpendiculairement à l'axe du rivet.

3. Procédé de fabrication d'un rivet aveugle autotaraudeur, dans lequel une tige (5) dotée d'une tête de forage (10) est insérée dans l'orifice central (2) d'un corps de rivet (1), caractérisé en ce qu'en vue de la fabrication de la pointe de forage (10) on prépare une ébauche an forme de tourillon, en acier à faible teneur en carbone, à bride (13), en ce qu'une section de forage (14) est formée par forgeage à froid dans une section inférieure de l'ébauche (11), qu'une section (12a) de l'ébauche voisine de la section de forage (14) est moletée et en ce que la bride (13) de l'ébauche (11) est écartée et aplanie, de sorte que la surface frontale (43) de la tige (12) s'étend perpendiculairement à l'axe du rivet, et que la pointe de forage (10) est soudée à la tige (5).

4. Procédé selon la revendication 3, caractérisé en ce que la bride (13) est simultanément pressée et relevée par des rouleaux en vue de la formation d'une section tronconique (42).

5. Procédé selon la revendication 3 ou 4, caractérisé en ce que la pointe de forage (10) est soudée à une tête élargie (6) de la tige (5), en particulier par soudage de bossage.

# FIG.1

# FIG.2

# FIG.3a

# FIG.3b

# FIG.3c

EP 0 380 005 B1

## FIG. 4

## FIG.5

7

FIG.6

FIG.7

FIG.8